Europäisches Patentamt

European Patent Office

Office européen des brevets

(11) Numéro de publication: **0 386 239**
**A1**

## (12) DEMANDE DE BREVET EUROPEEN PUBLI E EN APPLICATION DE L'article 158, paragraphe 3 de la CBE

(21) Numéro de dépôt: **88909011.4**

(22) Date de dépôt: **19.08.88**

(86) Numéro de dépôt internationale :
**PCT/SU88/00158**

(87) Numéro de publication internationale :
**WO 90/02433 (08.03.90 90/06)**

(51) Int. Cl.⁵: **H02K 1/24, H02K 21/08**

(43) Date de publication de la demande:
**12.09.90 Bulletin 90/37**

(84) Etats contractants désignés:
**DE FR IT SE**

(71) Demandeur: **NAUCHNO-PROIZVODSTVENNOE OBIEDINENIE "MAGNETON"**
**ul. Kuibysheva, 26**
**Vladimir, 600029(SU)**

Demandeur: **SIMFEROPOLSKY GOSUDARSTVENNY UNIVERSITET IMENI M.V.FRUNZE**
**ul. Yaltinskaya, 4**
**Simferopol, 333036(SU)**

(72) Inventeur: **STADNIK, Ivan Petrovich**
**ul. Kievskaya, 134a-18**
**Simferopol, 333043(SU)**
Inventeur: **GRIDNEV, Alexandr Ivanovich**
**ul. Gorkogo, 85b-31**
**Vladimir, 600005(SU)**
Inventeur: **KLEVETS, Nikolai Ivanovich**
**ul. Z.Kosmodemyanskoi, 16**
**Simferopol, 333023(SU)**
Inventeur: **KELIN, Nikolai Alexandrovich**
**ul. Frunze 34-54**
**Vladimir, 600020(SU)**

(74) Mandataire: **Beauchamps, Georges et al**
**Cabinet Z.Weinstein 20, avenue de Friedland**
**F-75008 Paris(FR)**

(54) **ROTOR MULTIPOLAIRE DE MACHINE ELECTRIQUE.**

(57) Le rotor multipolaire de machine électrique ayant essentiellement la forme d'un cylindre annulaire et qui comporte un nombre pair d'aimants (1) au moins égal à quatre, formé avec un matériau magnétique dur, les aimants étant disposés suivant une circonférence et adjacents les uns aux autres, chaque ai-

mant (1) ayant en section transversale du rotor une forme de secteur à distance angulaire ($\propto$) entre les bouts des rayons (R) délimitant le secteur égale à la valeur d'une division polaire ($\approx$) du rotor.

FIG. 1

"Rotor multipolaire de machine électrique"

## Domaine de l'invention

La présente invention concerne les machines électriques et a notamment pour objet un rotor multipolaire de machine électrique.

## Etat de la technique

Lors de la fabrication des machines électriques à aimants permanents, l'une des tâches principales est l'amélioration des caractéristiques électromécaniques spécifiques (puissance, couple rotatif, f.é.m. et autres) par unité de masse de la machine.

Les solutions possibles audit problème sont l'accroissement du flux magnétique d'excitation (dans ce que suit : flux magnétique) produit par le rotor multipolaire de machine électrique et qui est obtenu en réalisant les aimants en matériaux magnétiques durs anysotropes avec de meilleures caractéristiques magnétiques, l'amélioration de l'utilisation du volume du rotor pour y placer les aimants, ainsi qu'un choix avantageux de l'orientation optimale de l'aimantation desdits aimants.

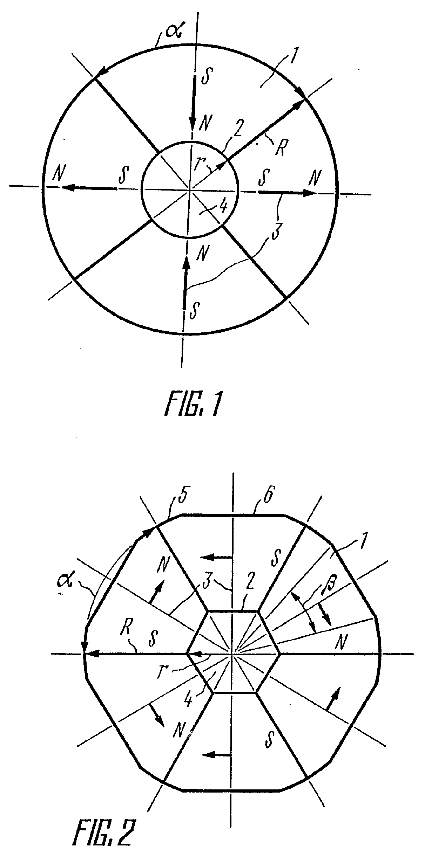

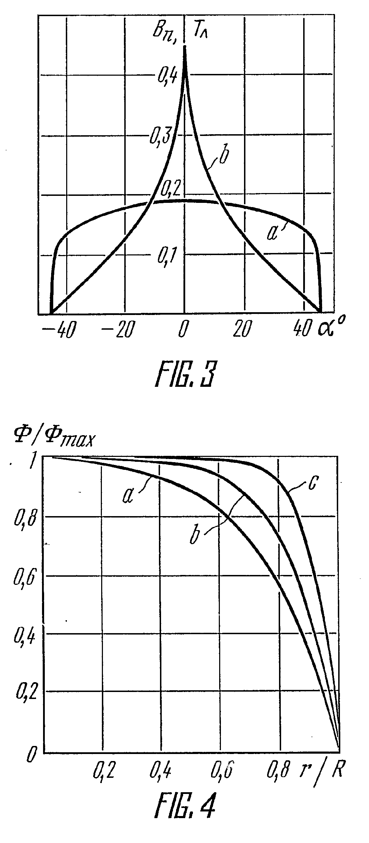

Il existe un rotor multipolaire de machine électrique (sous la rédaction de Ju. M. Pyatin : "Aimants permanents", 1980, Energiya, (Moscou), pp; 139 à 140, fig. 2 à 15d) qui comporte un aimant permanent multipolaire en forme d'étoile sur lequel est engagé à la presse un bandage avec en alternance des tronçons en matériau magnétique doux adjacents aux pôles de l'aimant et servant d'épanouissements polaires et des tronçons en matériau non magnétique.

Ledit rotor multipolaire est fabriqué par coulée en matériau magnétique dur et est aimanté dans un inducteur de forme spéciale.

Le rotor multipolaire connu est caractérisé par la faible valeur du flux magnétique par pôle obtenue grâce à la faible valeur d'aimantation de saturation du matériau magnétique dur utilisé qui ne présente pas d'anysotropie cristalline.

La présence des épanouissements polaires provoque l'affaiblissement du flux magnétique par suite de l'accroissement des flux de dissipation qui se forment entre les épanouissements polaires adjacents, ainsi que par l'accroissement des pertes par courants de Foucault et par réaimantation.

Outre cela, la présence des épanouissements polaires provoque l'accroissement de l'inductance de la machine électrique.

Il existe également un rotor multipolaire de machine électrique (SU, A, 647797) essentiellement sous la forme d'un cylindre annulaire qui comporte un nombre pair au moins égal à quatre d'aimants en matériau magnétique dur, de préférence à texture magnétique rectiligne, disposés suivant une circonférence et adjacents les uns aux autres.

Dans le rotor multipolaire connu, chaque aimant permanent a une forme prismatique et est aimanté le long de son axe de symétrie, et possède également un épanouissement polaire en matériau magnétique doux. Pour mieux remplir le volume du rotor avec le matériau magnétique dur, les aimants prismatiques ont des pans latéraux biseautés et les aimants adjacents se touchent par ces pans biseautés.

Les aimants permanents sont fixés sur une douille en matériau magnétique doux et sont séparés par des pièces intercalaires en matériau non magnétique.

La structure décrite plus haut du rotor ne permet pas de remplir totalement son volume avec le matériau magnétique dur, qui, à cause de la présence des épanouissements polaires, est éloigné de la surface cylindrique du rotor, ce qui ne permet pas d'élever notablement le flux magnétique. En outre, la présence d'épanouissements polaires affaiblit le flux magnétique par suite de l'apparition de flux de dissipation entre les épanouissements polaires adjacents, augmente les pertes par courants de Foucault et par réaimantation, et de plus provoque l'accroissement de l'inductance de la machine électrique.

Les sources du flux magnétique d'excitation d'un tel aimant sont des charges magnétiques réparties par les pôles ayant en section la forme d'un arc dont la longueur est notablement inférieure à la valeur d'une division polaire du rotor, ainsi que les charges magnétiques réparties sur les surfaces en matériau magnétique doux et produisant le flux magnétique de direction opposée au flux magnétique des charges réparties sur les pôles. Un tel arc polaire raccourci et la présence d'un flux magnétique de direction opposée dans la douille provoque un affaiblissement rapide de l'induction dans l'entrefer en dehors dudit arc, ce qui entraîne la réduction du couple mécanique développé par le moteur électrique.

Exposé de l'invention

L'invention vise à créer un rotor multipolaire de machine électrique dont la forme des aimants permettrait d'accroître le flux magnétique du rotor.

Le problème est résolu grâce à un rotor multipolaire de machine électrique ayant essentiellement la forme d'un cylindre annulaire avec un nombre pair au moins égal à quatre, d'aimants en matériau magnétique dur, de préférence à texture magnétique rectiligne, disposés sur une circonférence et adjacents les uns aux autres, caractérisé en ce qu'en section transversale du rotor, chaque aimant a la forme d'un secteur avec une distance angulaire entre les bouts des rayons délimitant le secteur égale à la valeur d'une division polaire du rotor, tandis que la surface cylindrique du rotor est formée directement par les surfaces extérieures des aimants.

Il est utile qu'en section transversale du rotor le côté extérieur de chaque aimant se présente sous la forme d'une courbe symétrique à l'axe de symétrie du secteur respectif.

Il est souhaitable qu'en section transversale du rotor, le côté intérieur de chaque aimant se présente sous la forme d'une courbe symétrique à l'axe de symétrie du secteur respectif.

Le rotor multipolaire de machine électrique proposé produit un flux magnétique proche du maximum pour le matériau magnétique dur utilisé et pour le volume donné du rotor.

Le rotor revendiqué peut utiliser des aimants en matériaux magnétiques durs et anysotropes, à texture rectiligne cristalline et magnétique, et possédant de hautes propriétés magnétiques. En outre, le rotor revendiqué a une haute stabilité à la désaimantation par suite à l'absence de pièces en matériaux magnétiques doux.

L'utilisation de tels rotors dans les machines électriques diminue considérablement les pertes par courants de Foucault et par réaimantation puisque les matériaux magnétiques durs et anysotropes ont une faible conduction.

La construction revendiquée permet de fabriquer des rotors à grand nombre de pôles (20 et plus) utilisés largement dans les moteurs électriques pas à pas, sans réduire notablement le flux magnétique total (c'est-à-dire de tous les pôles).

Brève description des dessins

L'invention ressortira de la description d'exemples concrets de réalisation qui suit et se réfère aux dessins annexés dans lesquels :

La figure 1 représente en vue de face un rotor quadripolaire de machine électrique selon l'invention ;

La figure 2 représente en vue de face un rotor hexapolaire suivant l'invention, avec une autre forme des aimants ;

La figure 3 représente la répartition de la composante normale du champ magnétique à la surface du rotor, pour un rotor hexapolaire et avec différentes orientations de l'aimantation ;

La figure 4 représente le flux magnétique par pôle (en unités relatives), du rotor représenté sur la figure 2, en fonction du rapport du rayon de l'orifice axial au rayon du rotor et pour différents nombres de pôles.

Meilleur mode de réalisation de l'invention

Le rotor multipolaire de machine électrique se présente essentiellement sous la forme d'un cylindre annulaire comportant un nombre pair au moins égal à quatre d'aimants 1 (figure 1), qui sont disposés régulièrement suivant une circonférence d'un rayon R (dans la version décrite, quatre aimants 1, ce qui correspond à un rotor quadripolaire), avec en alternance des pôles des aimants 1 qui sont orientés vers le centre de la circonférence et d'autres pôles qui sont orientés vers sa périphérie.

Les aimants 1 sont fabriqués en matériau magnétique dur et il est préférable de les fabriquer en matériau magnétique dur et anysotrope possédant une texture rectiligne cristalline et magnétique, puisque de tels matériaux présentent de meilleures caractéristiques magnétiques.

Les aimants 1 se disposent de façon que leurs pôles orientés vers la périphérie de la circonférence forment directement la surface cylindrique du rotor.

En section transversale du rotor (représenté sur les figures 1 et 2, en vue de face), chaque aimant 1 a la forme d'un secteur ayant une distance angulaire $\alpha$ entre les bouts des rayons R délimitant le secteur, égale à la valeur d'une division polaire $\tau$ du rotor, où $\tau$ = 2/p, avec p égal au nombre de paires de pôles du rotor. Dans la version décrite du rotor, l'aimant 1 est délimité côté extérieur par un arc coïncidant avec l'arc $\alpha$ et côté intérieur 2 par une courbe symétrique par rapport à l'axe de symétrie 3 du secteur, autrement dit par un arc de circonférence ayant un rayon égal à r.

Avec une telle disposition des aimants 1, le rotor présente un orifice axial 4 rond et destiné à recevoir une douille ainsi qu'un arbre en matériau non magnétique.

Dans un autre mode de réalisation du rotor représenté sur la figure 2, le nombre d'aimants 1 est égal à six ce qui correspond à un rotor hexapolaire. Côté extérieur, chaque aimant 1 est délimité par deux arcs 5 symétriquement disposés, avec une circonférence correspondant au rayon R, ainsi que par la corde 6 reliant les bouts de ces arcs 5, de façon que l'angle ß entre les rayons R et passant par les bouts des arcs 5 de deux aimants 1 adjacents, est défini par l'expression : $ß = \alpha / \tau = \alpha \, p/2 \pi$. Une telle exécution du côté extérieur de l'aimant 1 est avantageuse dans le cas où le nombre de pôles du stator (qui n'est pas représenté sur le dessin) de la machine électrique est supérieur au nombre de pôles du rotor, ce qui est typique pour les moteurs électriques pas à pas.

Du côté intérieur 2, chaque aimant 1 est délimité par une courbe·symétrique par rapport à l'axe de symétrie 3 du secteur et représentant, dans la version décrite, un tronçon de la droite reliant les côtés latéraux du secteur. Avec une telle disposition des aimants 1, le rotor présente un orifice axial 4 de forme hexaédrique destiné à recevoir une douille et un arbre en matériau non magnétique.

Dans les modes de réalisation décrits plus haut, on obtient une économie du matériau magnétique dur des aimants 1 qui s'accroît avec l'augmentation du nombre de pôles du rotor.

Pour mieux comprendre l'esprit et les avantages de l'invention, la figure 3 représente des courbes obtenues par calcul et illustrant la répartition de la composante $B_{ch}$ du champ magnétique du rotor quadripolaire, qui est normale à la surface intérieure du stator de la machine électrique (la courbe "a" correspond à un rotor dont l'aimantation est orientée

- 8 -

le long des axes de symétrie 3 des aimants 1 et la courbe "b" à un rotor dont l'aimantation est orientée perpendiculairement aux axes de symétrie 3 des aimants 1) en fonction de la valeur de la distance angulaire $\alpha$, et la figure 4 illustre à l'aide de courbes le rapport entre le flux magnétique 8 et le flux maximum $\overline{\Phi}$ pour les rotors multipolaires représentés sur les figures 1, 2 et en fonction du rapport entre le rayon r de l'orifice axial 4 et le rayon R du rotor, et ce pour différents nombres de pôles (courbe "a" pour p = 4, courbe "b" pour p = 8, courbe "c" pour p = 18).

Le rotor multipolaire de machine électrique proposé est fabriqué de la façon suivante.

On découpe dans un matériau magnétique dur les aimants 1 (figures 1, 2) suivant la forme décrite plus haut et avec des dimensions prédéterminées qui sont définies par les dimensions du stator qui reçoit le rotor.

En cas d'utilisation pour les aimants 1 d'un matériau magnétique dur et anysotrope ayant une texture rectiligne cristalline et magnétique, il faut découper les aimants 1 (figure 1) de façon que leurs axes de symétrie 3 soient parallèles aux axes de faible aimantation du matériau et que les axes de symétrie 3 des aimants 1 (figure 2) soient perpendiculaires à ces axes de faible aimantation.

Les aimants 1 découpés peuvent être aimantés dans un inducteur bipolaire dans le sens prédéterminé, autrement dit, les aimants 1 (figure 1) parallèlement à leurs axes de symétrie 3, et les aimants 1 (figure 2), perpendiculairement à leurs axes de symétrie 3.

Ensuite, les aimants 1 sont liés les uns aux autres à l'aide de colle ou à l'aide d'une enveloppe en matériau non magnétique (non représentée). Si les volumes des aimants 1 sont importants, ils peuvent être formés par l'assemblage d'aimants plus petits tout en remplissant les exigences énoncées plus haut et concernant l'orientation de leurs axes de faible aimantation. Durant l'assemblage, les aimants 1 peuvent être immédiatement fixés à la douille ou à l'arbre du rotor qui présente une forme correspondant à l'orifice transversal.

En cas d'utilisation de matériaux céramiques, les aimants 1 peuvent être fabriqués par mise en forme de matériaux pulvérulents.

Dans d'autres cas, l'aimantation du rotor assemblé peut être réalisée à l'aide d'un inducteur multipolaire (en fonction du nombre de pôles du rotor). Pour obtenir une répartition optimale du champ magnétique, on peut introduire des conducteurs de courant dans l'orifice axial 4 du rotor qui seront retirés après l'opération de l'aimantation. Le rayon r de l'orifice axial 4 en fonction du nombre choisi de pôles du rotor est déterminé sur la figure 4 en partant de l'hypothèse suivant laquelle le rapport $\phi/\phi_{max}$ est égal à 0,95. On voit qu'avec l'accroissement du nombre de pôles du rotor, le rapport optimal $\phi/\phi_{max}$ peut être obtenu à une plus grande valeur du rayon r, ce qui permet d'économiser notablement le matériau magnétique dur et par conséquent permet de réduire la masse du rotor.

Comme on l'a déjà dit, la structure du rotor représentée sur la figure 1 et l'orientation de l'aimantation le long des axes de symétrie 3 des aimants 1 ne sont avantageux que pour un nombre réduit de pôles (p $\langle$ 3). Dans ce cas, le rayon r de l'orifice axial 4 est suffisamment petit par rapport à R et favorise ainsi un remplissage quasi complet du rotor avec le matériau magnétique dur.

Suivant le mode de réalisation en question le rotor est produit par les charges magnétiques réparties sur la surface extérieure des aimants 1 et les charges magnétiques sont absentes sur les frontières de séparation des aimants 1. Dans ce cas, la composante normale du stator ne subit pas de variation par sauts aux frontières de séparation des aimants 1, puisque les vecteurs d'aimantation des aimants 1 qui sont adjacents forment conjointement à la normale à la frontière de séparation entre ces aimants 1, le même angle qui est égal à $\pi/2 - \pi/p$. Par conséquent, il n'y a pas de diminution du flux magnétique due aux charges internes. Outre cela, dans la structure considérée, on observe une faible chute de la composante normale $B_{ch}$ du champ magnétique (figure 3, courbe a) du centre du pôle vers les frontières de la division polaire, ce qui est avantageux pour les machines électriques où le nombre de pôles du rotor et du stator est le même.

Comparée au rotor fabriqué en matériau à texture magnétique curviligne optimale, la version considérée du rotor quadripolaire présente un affaiblissement du flux magnétique par pôle de 6%, mais la texture magnétique curviligne ne peut être obtenue en pratique qu'avec les matériaux cristallins isotropes, dont les propriétés magnétiques sont inférieures de 50% par rapport à celles des matériaux cristallins anysotropes.

Les essais ont démontré que le rotor suivant l'invention présente en comparaison avec un rotor en une seule pièce et en matériau isotrope, un flux magnétique et un couple développé supérieurs respectivement de 8,7% et 7%, et en comparaison avec un rotor assemblé avec matériau identique à celui utilisé suivant l'invention mais fixé à une douille en matériau magnétique doux, présente les même paramètres
supérieurs de 1,5 fois.

Dans le mode de réalisation du rotor représenté sur la
figure 2, le champ magnétique est produit par les
charges magnétiques disposées tant sur la surface des
aimants 1 que sur les frontières de séparation des
aimants 1 adjacents. Du fait que les aimants 1 sont
aimantés et disposés de façon qu'ils ne touchent pas
les pôles avec lesquels ils coïncident, de forts champs
de désaimantation apparaissent à l'intérieur du rotor.
Les aimants de tels rotors sont fabriqués de préférence
en matériaux surcritiques à texture rectiligne
cristalline et magnétique (matériaux capables de
régénérer totalement le flux magnétique suite à
l'action du champ de désaimantation extérieur). Avec
l'augmentation du nombre de pôles du rotor, l'apport du
champ des charges internes au flux magnétique croît et
celui des charges superficielles diminue. Une telle
redistribution de l'apport des charges magnétiques a
pour résultat que le flux magnétique résultant de tous
les pôles du stator est peu sensible au changement du
nombre de pôles jusqu'à ce que p = 20. Les calculs du
flux magnétique ont été faits pour la largeur maximale
d'une division polaire du stator et pour un entrefer de
travail de 0,08 R, et dans ce cas et avec p = 4, le
flux magnétique à un maximum peu notable. Dans le cas
d'un accroissement du nombre de pôles du rotor, le flux
magnétique faiblit un peu. Pour p = 10, le flux
magnétique résultant est de 96,5% du flux résultant du
rotor octopolaire, pour p = 15, ce flux est de 93%
alors que pour p = 20, il est de 89%.

Cette variation du flux magnétique résultant permet de
fabriquer des moteurs pas à pas et des accouplements
électromagnétiques ayant un grand nombre de pôles sur
le rotor (p = 20) sans pour autant diminuer notablement

- 12 -

leur puissance pas plus que leur couple de synchronisation.

La forme décrite du côté extérieur de l'aimant 1 et qui inclut deux arcs 5 ainsi qu'une corde 6 permet d'économiser le matériau magnétique dur et ainsi de réduire la masse de l'aimant 1. Dans le cas d'un grand nombre de pôles, le côté extérieur peut ne présenter qu'une corde 6, ceci n'entraînant toutefois pas d'affaiblissement notable du flux magnétique résultant. Ainsi, pour p = 2, l'affaiblissement du flux magnétique représente 52% (en l'absence de l'orifice axial 4 et avec un entrefer entre le rotor et le stator égal à 0,0008 R), pour p = 10, l'affaiblissement représente 11%, pour p = 15 il représente 7% et pour p = 40 il représente 5,5%.

Dans le mode de réalisation en question du rotor, la répartition de la composante du champ magnétique normale à la surface du stator comporte des crêtes, ce qui s'explique par la concentration des charges intérieures sur les frontières des aimants 1 (figure 3, courbe b).

Le rayon r de l'orifice axial 4 recevant l'arbre en matériau non magnétique est choisi de façon identique à celle décrite pour la figure 4.

Ainsi, la structure particulière du rotor suivant l'invention permet de diminuer le pas du moteur électrique sans pour autant diminuer sa puissance, et permet en outre d'augmenter le couple de synchronisation et la fréquence de reprise, ainsi que d'accroître la vitesse du moteur électrique grâce à la réduction de la masse du rotor, et sans diminuer le flux magnétique total de façon notable.

- 13 -

Application industrielle.

La présente invention peut être utilisée dans les industries électrique, aéronautique, de construction des machines-outils, etc.

Revendications

1. Rotor multipolaire de machine électrique ayant essentiellement la forme d'un cylindre annulaire, et qui comporte un nombre pair d'aimants (1) au moins égal à quatre, réalisés avec un matériau magnétique dur de préférence à texture magnétique rectiligne, les aimants étant disposés suivant une circonférence et adjacents les uns aux autres, caractérisé en ce qu'en section transversale du rotor, chaque aimant (1) a la forme d'un secteur ayant une distance angulaire ($\alpha$) entre les bouts des rayons (R) qui délimitent le secteur égale à la valeur d'une division polaire ($\tau$) du rotor, la surface cylindrique du rotor étant directement formée par les surfaces extérieures des aimants (1).

2. Rotor multipolaire selon la revendication 1, caractérisé en ce qu'en section transversale du rotor, le côté extérieur de chaque aimant (1) décrit une courbe symétrique par rapport à l'axe de symétrie (3) du secteur respectif.

3. Rotor multipolaire selon la revendication 1 ou 2, caractérisé en ce qu'en section transversale du rotor, un côté intérieur (2) de chaque aimant (1) décrit une courbe symétrique par rapport à l'axe de symétrie (3) du secteur respectif.

- 15 -

Revendications modifiées de la demande internationale
PCT/SU 88/00158

1. Rotor multipolaire de machine électrique, ayant essentiellement la forme d'un cylindre annulaire, et qui comporte un nombre pair d'aimants (1), au moins égal à quatre, formés avec un matériau magnétique dur de préférence à texture magnétique rectiligne, les aimants étant disposés suivant une circonférence et adjacents les uns aux autres, caractérisé en ce qu'en section transversale du rotor, chaque aimant (1) a la forme d'un secteur avec une distance angulaire ($\alpha$) entre les bouts des rayons (R) délimitant le secteur égale à la valeur d'une division polaire ($\tau$) du rotor, la surface cylindrique du rotor étant directement formée par les surfaces extérieures des aimants (1).

2. Rotor multipolaire selon la revendication 1, caractérisé en ce qu'en section, transversale du rotor, le côté extérieur de chaque aimant (1) décrit une courbe symétrique par rapport à l'axe de symétrie (3) du secteur respectif.

3. (modifiée) Rotor multipolaire selon la revendication 2, caractérisé en ce qu'en section transversale du rotor, un côté intérieur (2) de chaque aimant (1) décrit une courbe symétrique par rapport à l'axe de symétrie (3) du secteur respectif.

FIG. 1

FIG. 2

FIG. 3

FIG. 4

# INTERNATIONAL SEARCH REPORT

International Application No PCT/SU 88/00158

## I. CLASSIFICATION OF SUBJECT MATTER (if several classification symbols apply, indicate all)

According to International Patent Classification (IPC) or to both National Classification and IPC

IPC$^4$ – H 02 K 1/24, 21/08

## II. FIELDS SEARCHED

### Minimum Documentation Searched

| Classification System | Classification Symbols |
|---|---|
| IPC$^4$ | H 02 K 1/06, 1/08, 1/22, 1/24, 21/06, 21/08, 21/12, 21/24 |

### Documentation Searched other than Minimum Documentation to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| Y | US,A,4433261 (KABUSHIKI KAISHA OKUMA TEKKOSHO) 21 February 1984 (21.02.84), see the abstract, fig.2 — | 1-3 |
| Y | US,A,4748359 (HITACHI,LTD)31 May 1988 (31.05.88) see the abstract, figures 1,6,8,10,14 — | 1-3 |
| Y | US,A,4386287 (RHYTHM WATCH CO.,LTD et al.)31 May 1983 (31.05.83),see column 3,lines 56-68; column 4, lines 1-30;figure 2 — | 1-3 |
| Y | FR,A1,2576162 (DOWTY FUEL SYSTEMS LIMITED) 18 July 1986 (18.07.86),see page 2,lines 21-35; page 3; page 4, lines 1-4;figure 1 — | 1-3 |
| Y | DE,C2,3147102 (OKUMA MACHINERY WORKS LTD) 19 July 1984 (19.07.84), see column 2,lines 64-68; column 3, lines 1-5;figures 4A,4B ———————— | 1-3 |

* Special categories of cited documents: 
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance: the claimed invention cannot be considered to involve an inventive step when the document is combined with one or more other such documents, such combination being obvious to a person skilled in the art.
"&" document member of the same patent family

## IV. CERTIFICATION

| Date of the Actual Completion of the International Search | Date of Mailing of this International Search Report |
|---|---|
| 21 April 1989 (21.04.89) | 05 May 1989 (05.05.89) |
| International Searching Authority | Signature of Authorized Officer |
| ISA/SU | |